# EUROPEAN PATENT APPLICATION

(11) **EP 2 996 289 A1**
(43) Date of publication of application: **16.03.2016**
(21) Application number: 14184787.1
(22) Date of filing: 15.09.2014
(51) Int. Cl.: H04L 12/707, H04L 12/735, H04L 12/703

(54) **Method, system and apparatus for establishing a data connection with parallel communication channels**

(71) Applicant: Nokia Solutions and Networks GmbH & Co. KG, 81541 Munich (DE)
(72) Inventor: Hoffmann, Klaus, 80995 Munich (DE)

(57) **Abstract**

It is described a method of establishing a data connection in a network (NW) between at least two communication devices (D1..D3), wherein at least two parallel active communication channels (C1, C2) are established between said communication devices (D1..D3). For establishing said data connection the Resource Reservation Protocol, "RSVP" for short, and/or the Path Computation Element Protocol, "PCEP" for short, and/or the Generalized Multi-Protocol Label Switching Protocol, "GMPLS" for short, is used.

## Description

### Field of invention

The present invention relates to a method, a system and an apparatus for establishing a data connection in a network between at least two communication devices by means of the Resource Reservation Protocol, "RSVP" for short, and/or the Path Computation Element Protocol, "PCEP" for short, and/or the Generalized Multi-Protocol Label Switching Protocol, "GMPLS" for short.

### Art Background

Methods of the kind above are known in prior art in principle. The RSVP protocol, the PCEP protocol and the GMPLS protocol are standardized methods to establish data connections in a network or in a plurality of connected networks. However, due to the ever increasing demand of bandwidth and due to the ever increasing number of communication devices, communication devices often suffer from low performance data connections.

Accordingly, there may be a need for an improved method of establishing a data connection in a network. In particular, the performance of a data connection shall be increased.

### Summary of the Invention

This need may be met by the subject matter according to the independent claims. Advantageous embodiments of the present invention are described by the dependent claims.

According to a first aspect of the invention, there is provided a method as disclosed in the opening paragraph, wherein
at least two parallel active communication channels are established between the at least two communication devices.

In this way, the performance of a data connection can be increased, wherein the term "performance" is not limited to pure bandwidth but can also be referred to quality and the like. For example, the data connection still is alive if a subset of the communication channels of the data connection is working badly or does not work at all for a period of time. On the other hand, if all communications channels work, the bandwidth of such a data connection is substantially increased in relation to a prior art data connection.

One particular advantage of the communication channels based on the RSVP/PCEP/GMPLS protocol is that they do not compete against one another. For example, in the MPTCP protocol different communication channels compete against each other for best bandwidth and the like with the effect that in the end it may happen that there is no substantial performance increase caused by parallel communication channels at all. This is not the case in the RSVP/PCEP/GMPLS protocol. In particular, also the Resource Reservation Protocol Traffic Engineering, "RSVP-TE" for short, or the Generalized Multi-Protocol Label Switching Protocol Traffic Engineering, "GMPLS-TE" for short can be used for establishing a data connection, which are improvements of the RSVP protocol or the GMPLS protocol, respectively.

Concretely, according to MPTCP RFC6182 (chapter 5.5) the TCP multipath are not completely disjoint, i.e. the TCP sub flows do not know the underlying topology per definition, and as such cannot guarantee separation. Furthermore, the TCP subflows do not really know the other TCP associations and therefore cannot be that aggressive in pushing aside the traffic of other application. This is achieved by intrinsic TCP features, however leads to the observation that each individual application traffic is not maximized/optimized, while simultaneously the network utilization rate is not minimized. MPTCP is defensive with regard to the competition, as subflows detect bottlenecks and thus throttle their own consumption in order to not interfere with other applications for fairness reasons. MPTCP (and also the Stream Control Transmission Protocol SCTP) are used without consideration of the traffic engineering task, thus leading to an inefficient usage of scarce resources as already known especially in the light of the expected demand increase.

It should be noted at this point that "data connection" has a general meaning in the context of the invention. Hence "data" may be audio data, text data, video data, picture data and/or machine data (e.g. program code, parameters, etc.) or any other data for use by computers.

Generally, the disclosed method may be used for computation simple data connections between two parties (point to point connection, P2P for short), path trees between a single party and a plurality of parties (point to multipoint connection, P2MP for short) and/or overlay networks between a plurality of parties (multipoint to multipoint connection, MP2MP for short). A path tree and an overlay network can also be seen as a crowd of single paths or connections. In case of a path tree all paths start (respectively: end) at one point; in case of an overlay network they crisscross.

An "overlay network" or virtual network generally is a network, which is built on the top of another network. Nodes in the overlay can be considered as being connected by virtual or logical links respectively paths. Each path may correspond to a number of physical links in the underlying network. The underlying physical network itself consists of connected subnetworks, which in particular are operated by different operators or providers.

It should also be noted that the invention is not limited to a single data connection, a single tree or a single overlay network to be computed. Rather, also a plurality of data connections, trees and/or overlay networks may be computed by a path computation element.

Furthermore, it should be noted that the requesting entity is not necessarily part of the requested data connection. The requesting entity may also request the data connection on behalf of the communication partners or another third party.

According to a further aspect of the invention, the communication channels are established based on (all or parts of) information about the capabilities and addresses of the communication devices. An address of a communication device may be an IP address or an Ethernet address and/or a wavelength in case of a optical termination for example. Moreover, the capabilities of the communication devices are considered. In particular, the intersection of capabilities of the communication devices may be used for establishing a data connection. If, for example, the communication devices provide different maximum data rates for data transmission, the lowest one is used for the data connection. However, this is just a simple example to illustrate this embodiment of the presented method. Generally, the capabilities of a communication device include one or more of the following:
- the kind of the network, which the communication device is connected to;
- the bandwidth of a port of the communication device to said network;
- the bandwidth of a communication channel/data connection in said network;
- the shared link risk group of a data connection in said network;
- the latency of the last mile from the communication device to the connected network;
- the packet loss of the last mile from the communication device to the connected network;
- the wavelength of the last mile from the communication device to the connected network (e.g. in case of a optical termination);
- the jitter of a communication channel/data connection to said network;
- the load of a communication channel/data connection to said network;
- the availability of a communication channel/data connection to said network;
- the reliability of a communication channel/data connection to said network;
- the tariff/cost of a communication channel/data connection to said network;
- the restart time of an application running in the communication device and using a communication channel/data connection to said network;
- the maintenance window of an application attached to said network.

According to another aspect of the invention, a path computation element computes a plurality of paths between the communication devices based on their capabilities and addresses, and the communication channels are established based on said paths. In this way reliable and proved means are used for path computation. It should be noted at this point that the term "path computation element" does not limit the computation entity to the computation of a path. A "path computation element" may also calculate trees and overlay networks.

According to a further aspect of the invention, the at communication devices send information about their capabilities and addresses directly to the path computation element. Alternatively, a first communication device may retrieve information about capabilities and an address of a further communication device from said further communication device and send information about its capabilities and address and information about the capabilities and address of said further communication device to the path computation element. In both ways, extra means for storing said information can be saved.

According to another aspect of the invention, the communication devices send information about their capabilities and addresses to a data base, and the path computation element retrieves said information (or the respective data) from said data base. The database stores said information about the communication devices for later use. The communication devices may send said information when they log in into a network, for example. At a later point in time - when establishing a data connection is requested - the path computation element retrieves said information from the data base. In this way, the communication devices are unburdened from sending information about their capabilities and addresses each time a data connection is requested.

According to yet another aspect of the invention, the communication devices send information about their capabilities and addresses to a data base, and a first communication device retrieves said information (or the respective data) about a further communication device from said data base and sends information about its capabilities and address and information about the capabilities and address of said further communication device to the path computation element. In this way the path computation element does not have the obligation to request the information about the communication devices from the data base, but gets it from one of the communication devices, preferably along with the request to establish a data connection.

According to a further aspect of the invention, the communication channels are established on different paths of the network. In this way, the reliability of the data connection can be increased, as it is unlikely that all communication channels via different path fall out at a time.

According to another aspect of the invention, the communication channels are established on a single path of the network. In this way, effort for path calculation can be kept low.

According to a further aspect of the invention, a communication channel between the communication devices is established by means of the Transmission Control Protocol, "TCP" for short, which is substituted or supplemented by at least two communication channels established by means of the RSVP protocol and/or the PCEP protocol and/or the GMPLS protocol (and in particular by means of the GMPLS-TE protocol and/or the RSVP-TE protocol). In this way, establishing a primary data connection is done by widely spread, proved and fast means. In a further step, this primary connection is substituted or supplemented by a connection based on the RSVP protocol and/or the PCEP protocol and/or the GMPLS protocol. Advantageously, an application running on a communication device is not be influenced by this substitution/supplement, meaning that the primary data connection based on the TCP-protocol and the secondary data connection based on the RSVP/RSVP-TE/PCEP/GMPLS/GMPLS-TE protocol do not differ from the viewpoint of the application.

According to another aspect of the invention, at least two parallel active communication channels between the communication devices are established by means of the Multipath Transmission Control Protocol, "MPTCP" for short, which are substituted or supplemented by communication channels established by means of the RSVP protocol and/or the PCEP protocol and/or the GMPLS protocol (and in particular by means of the GMPLS-TE protocol and/or the RSVP-TE protocol). The MPTCP protocol already allows for parallel communication channels, which may easily substituted/supplemented by communication channels of the RSVP/PCEP/GMPLS protocol. One particular advantage of the communication channels based on the RSVP/RSVP-TE/PCEP/GMPLS/GMPLS-TE protocol over the communication channels based on the MPTCP protocol is that they do not compete against one another (as has been mentioned already above) and also provide a traffic engineering data connection in case of RSVP-TE and/or GMPLS-TE is used.

According to a further aspect of the invention, at least one of the communication devices is embodied as a mobile phone, a smart phone, a tablet, a notebook, a personal computer, a machine to machine device (MTM) or machine type communication device (MTC), which for example is a sensor or the like. In this way the presented method can be applied to widely spread communication devices.

According to another aspect of the invention, at least one of the communication devices is embodied as a gateway or a router, in particular a gateway or a router to a private network. In this way the actual communication partner (i.e. the communication device, which is connected to the gateway or router) does not need to have means for a data connection with parallel communication channels. This is done by the gateway/router.

In a next aspect of the invention, a system is provided capable of performing the method steps as laid out in the method claims listed below and as explained in the specification.

According to a further embodiment, an apparatus is provided for establishing a data connection in a network between at least two communication devices by means of the Resource Reservation Protocol, "RSVP" for short, and/or the Path Computation Element Protocol, "PCEP" for short, and/or the Generalized Multi-Protocol Label Switching Protocol, "GMPLS" for short, wherein at least two parallel active communication channels are established between said at least two communication devices. This apparatus may be designed as a path computation element or may be part of a path computation element. The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows an example of establishing a data connection between two communication devices with communication channels on different paths;
Figure 2 shows an example of establishing a data connection between two communication devices with communication channels on the same path;
Figure 3 shows an example of establishing a data connection by means of a database providing information about the communication devices to a path computation element;
Figure 4 shows an example of establishing a data connection, wherein a communication device retrieves information about another communication device from the data base;
Figure 5 shows an example, in which one of the communication devices is embodied as a gateway or a router;
Figure 6 shows exemplary layers of a data connection based on the MPTCP protocol;
Figure 7 shows an example, in which the MPTCP layer is augmented by a PCC layer;
Figure 8 shows an example, in which the MPTCP layer is augmented by a RSVP layer and
Figure 9 shows an example, in which the TCP subflow layers have been substituted by RSVP/MPLS layers.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

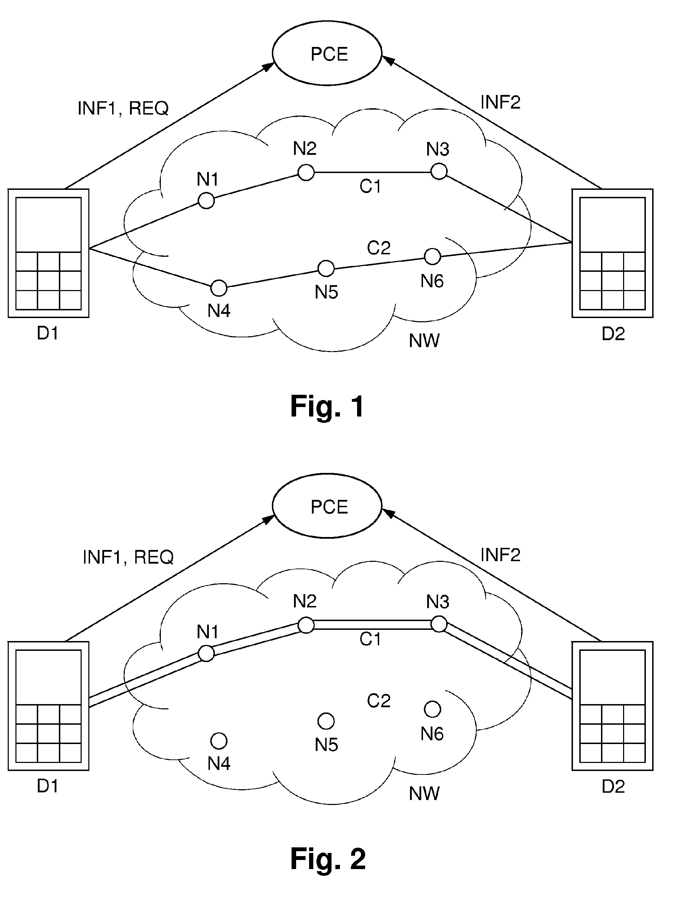

Fig. 1 shows an exemplary arrangement of a first communication device D1, a second communication device D2, a network NW and a path computation element PCE associated with the network NW. The network comprises network nodes N1..N6.

Next, an example is presented how a data connection can be established between the communication devices D1 and D2. In this particular example, the communication devices D1, D2 send information INF1, INF2 about their capabilities and addresses directly to the path computation element PCE. Moreover, a request REQ for establishing a data connection to the second communication device D2 is sent from the first communication device D1 to the path computation element PCE. Said request REQ may be sent along with the information INF1 or in a separate message. Moreover, one should note, that the request to establish a data connection can also be sent by the second communication device D2.

In a next step, the path computation element PCE computes a plurality of paths between the communication devices D1, D2 based on their capabilities and addresses. Finally, a data connection with a plurality (in this example with two) communication channels C1, C2 is established based on said paths. A first communication channel C1 is switched over network nodes N1..N3, the second communication channel C2 is switched over network nodes N4..N6.

It should be noted, that Fig. 1 shows a simple configuration of a network NW for the sake of brevity. However, one skilled in the art can easily perceive, that the data connection between the communication devices D1 and D2 may be established via a different set of network nodes N1..N6, via additional networks NW and may be based on a higher number of communication channels C1, C2 than depicted in Fig. 1.

Generally, the capabilities of a communication device D1, D2 include one or more of
- kind of the network NW, which the communication device D1, D2 is connected to;
- bandwidth of a port of the communication device D1, D2 to said network NW;
- bandwidth of a communication channel C1, C2/data connection in said network NW;
- shared link risk group of a data connection in said network NW;
- latency of the last mile from the communication device D1, D2 to the connected network NW;
- jitter of a communication channel C1, C2/data connection to said network NW;
- packet loss of a communication channel C1, C2/data connection to said network NW;
- wavelength of a communication channel C1, C2/data connection to said network NW (e.g. in the case of a optical termination);
- load of a communication channel C1, C2/data connection to said network NW;
- availability of a communication channel C1, C2/data connection to said network NW;
- reliability of a communication channel C1, C2/data connection to said network NW;
- tariff/cost of a communication channel C1, C2/data connection to said network NW;
- restart time of an application running in the communication device D1, D2 and using a communication channel C1, C2/data connection to said network NW;
- maintenance window of an application attached to said network NW.

An address of a communication device D1, D2 for example may be an IP address or an Ethernet address and/or the wavelength in case of a optical termination.

Fig. 2 shows a further example how a data connection may be established between communication devices D1, D2, which is quite similar to the example shown in Fig. 1. Whereas in Fig. 1 the communication channels C1, C2 are established on different paths of the network NW (concretely via N1..N3 and N4..N6), in Fig. 2 both communication channels C1, C2 are established on a single path of the network NW (concretely via N1..N3).

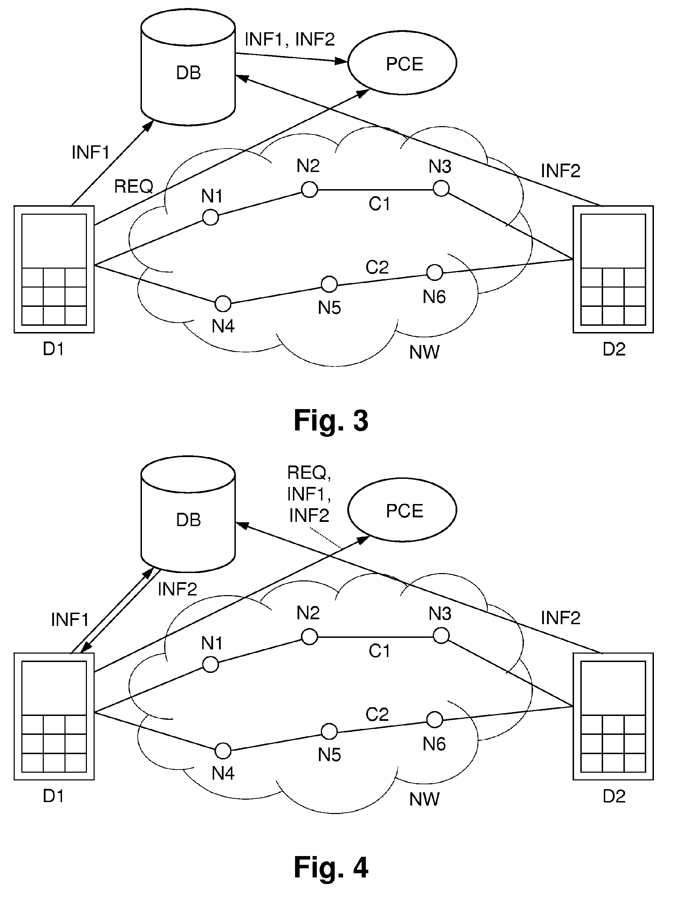

Fig. 3 shows another example how to establish a data connection between communication devices D1, D2. Whereas in Figs. 1 and 2 communication devices D2, D2 send information INF1, INF2 about their capabilities and addresses directly to the path computation element PCE, in Fig. 3 they send it to a data base DB, in which information INF1, INF2 is stored for later use. The communication devices D2, D2 may send information INF1, INF2 when they log in into a network for example.

At a later point in time, communication device D1 sends a request REQ to the path computation element PCE to establish a data connection to the second communication device D2. In a next step, the path computation element PCE retrieves stored information INF1, INF2 from said data base DB.

As already presented in connection with Figs. 1 and 2, the path computation element PCE then computes a plurality of paths between the communication devices D1, D2 based on their capabilities and addresses. Finally, a data connection with a plurality (in this example again with two) communication channels C1, C2 is established based on said paths. A first communication channel C1 is switched over network nodes N1..N3, the second communication channel C2 is switched over network nodes N4..N6.

It should be noted at this point that the path computation element PCE comprises or accesses a database storing data about the structure of the network NW, which database is not explicitly shown in Fig. 3. It should also be noted that said data in principle can also be stored in the database DB, which is used for storing information INF about the communication devices D1, D2.

Fig. 4 now shows an example, which is quite similar to the example shown in Fig. 3, but instead of retrieving information INF1, INF2 from the data base DB, it gets it from the first communication device D1. For this reason, communication device D1 retrieves information INF2 associated with the second communication D2 from said data base DB and sends information INF1 associated with its own capabilities and address and information INF2 associated with the capabilities and address of said second communication device D2 to the path computation element PCE. The request REQ for establishing a data connection between communication devices D1, D2 again may be sent along with the information INF1, INF2 or in a separate message. Moreover, one should note, that the request to establish a data connection can also be sent by the second communication device D2.

In a quite similar way, but without the use of the database DB, communication device D1 may retrieve information INF2 about capabilities and an address of communication device D2 directly from said communication device D2. Then, communication device D1 sends information INF1 about its capabilities and address and information INF2 about the capabilities and address of communication device D2 to the path computation element PCE.

In the examples shown in Figs. 1 to 4, the communication devices D1, D2 are embodied as mobile phones respectively smart phones. Certainly, this is no necessary condition. Communication devices D1, D2 may also be embodied as a tablet, a notebook, a personal computer, a machine to machine (MTM) or machine type communication (MTC) device (e.g. sensor and etc) for example. Communication devices D1, D2 may also be of different kinds, meaning that communication device D1 may be a mobile phone/smart phone, whereas communication device D2 may be a tablet, a notebook or a personal computer for example.

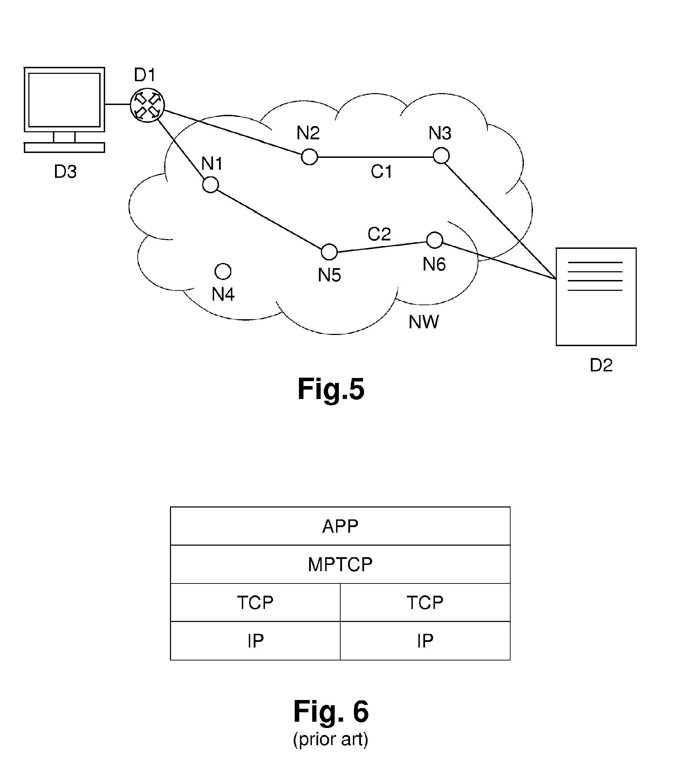

At least one of the communication devices may also be embodied as a gateway or a router, in particular a gateway or a router to a private network. In this context Fig. 5 shows an example, in which a data connection is established between a first communication device D1, which is embodied as a router, and a second communication device D2, which is embodied as a server. However, the router D1 is not the endpoint of the data connection, but the personal computer D3 connected to the router D1. The data connection having parallel active communication channels C1, C2 as such may be established as shown in one of Figs. 1 to 4. One should note, that the path computation element PCE is not shown in Fig. 5 for the sake of brevity.

Until now, establishing a data connection has just been shown in connection with the path computation element Protocol, "PCEP" for short. However, it should be noted, that establishing a data connection may also be established based on the Resource Reservation Protocol, "RSVP" for short, and/or Generalized Multi-Protocol Label Switching Protocol, "GMPLS" for short, in a quite equivalent way. In particular, also the RSVP-TE protocol and/or the GMPLS-TE protocol may be used for that reason.

Moreover, until now establishing a primary connection has been disclosed. However, the protocols mentioned above may also be used to substitute or supplement an existing data connection between communication devices D1..D3, which was established based on another protocol.

For example, a communication channel C1 between communication devices D1..D3 established by means of the Transmission Control Protocol, "TCP" for short, can be substituted and supplemented by at least two communication channels C1, C2 established by means of the RSVP/RSVP-TE protocol and/or the PCEP protocol and/or the GMPLS/GMPLS-TE protocol.

Furthermore, parallel active communication channels C1, C2 between the communication devices D1..D3 established by means of the Multipath Transmission Control Protocol, "MPTCP" for short, can be substituted by communication channels C1, C2 established by means of the RSVP/RSVP-TE protocol and/or the PCEP protocol and/or the GMPLS/GMPLS-TE protocol.

In this context, Fig. 6 shows different layers in a communication device D1..D3 starting with an application on the top, a MPTCP layer below, and two parallel TCP layers respectively IP layers representing the parallel communication channels C1, C2. Establishing parallel communication channels C1, C2 based on the MPTCP protocol is known as such and thus not explained in detail here.

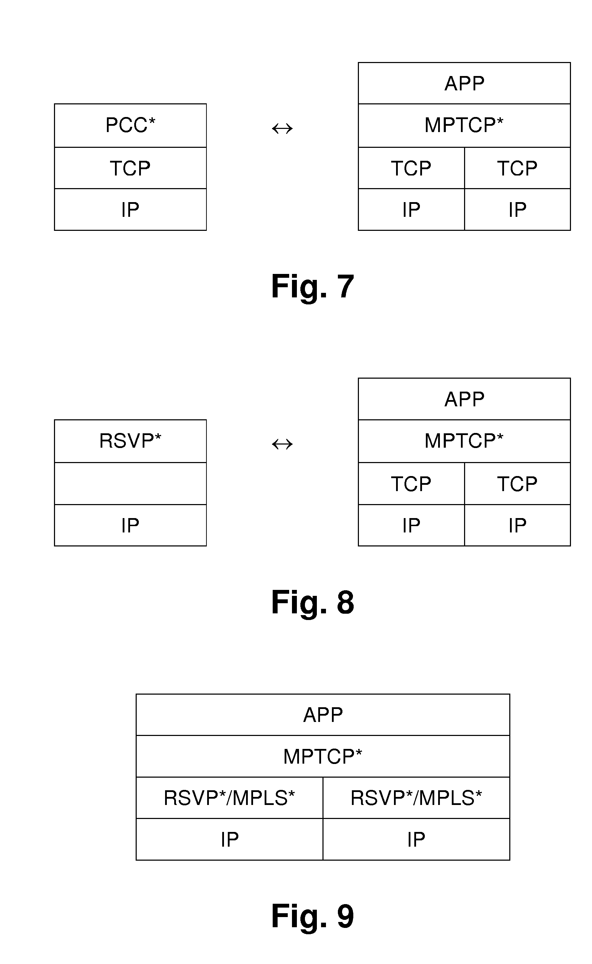

Fig. 7 shows an example, in which the MTCP layer is augmented by a path computation client layer PCC* of the PCEP protocol. From a formal point of view, a path computation client (PCC) is usually used for pure path computation/calculation. As such the modified MPTCP* layer implicitly consults the path computation element PCE via the path computation client PCC for the path calculation. However, both the path computation client PCC as well as the path computation element PCE may each be able to compute a path and to reserve/instantiate a path. Path computation for substituting the communication channels C1, C2 can take place as disclosed in Figs. 1 to 5 for example.

The asterisk symbolizes that the path computation client layer PCC* is not based on the PCEP protocol as currently standardized, but based on a slightly modified PCEP protocol allowing for the substitution mentioned above. Accordingly, the MPTCP* layer is not based on the MPTCP protocol as currently standardized, but based on a slightly modified MPTCP protocol allowing for the augmentation mentioned above.

On receipt of the path computation result, the MPTCP* may trigger the substitution of the existing TCP subflows respectively the communication channels C1, C2. For substituting the TCP subflows, the n-tuple of source address and port, destination address and port, protocol number plus a new local connection identifier at each host (communication device D1, D2) may be used.

In the example above, the MPTCP layer has been augmented with a PCC* layer. However, it is also possible that the MPTCP* triggers the substitution of the existing TCP subflows without consulting the path computation element PCE and also that the PCC* layer purely is used for path computation. Reservation/instantiation of a path as such and thus substitution of a TCP subflow may also be done by means of the RSVP protocol or the GMPLS protocol. In other words, the MPTCP layer may be augmented by RSVP layers and/or GMPLS layers in just an equivalent way.

Fig. 8 shows an example, in which the MPTCP layer is augmented by a RSVP* layer. The asterisk symbolizes that the RSVP* layer is not based on the RSVP protocol as currently standardized, but based on a slightly modified RSVP protocol allowing for the substitution of the TCP subflows. The procedure to substitute the communication channels C1, C2 is quite similar to the procedure disclosed for Fig. 7.

Finally, Fig. 9 shows an example, in which the TCP subflow layers representing the communication channels C1, C2 have been replaced/substituted by TCP/MPLS* layers. Again, the asterisk symbolizes that the MPLS* layers are not based on the GMPLS protocol as currently standardized, but based on a slightly modified GMPLS protocol allowing for the substitution mentioned above. Generally, also the GMPLS-TE protocol may be used instead of the GMPLS protocol for this reason.

It should be noted that the RSVP/GMPLS-TE request for reservation/instantiation of the connection may be performed after the explicit path computation via the path computation client PCC took place. However, the RSVP/GMPLS-TE request for reservation/instantiation of the connection may also be performed as a standalone request without previous explicit path computation.

Furthermore it should be noted that the PCEP protocol may be enhanced with an (explicit or implicit) indication that a path calculation to be calculated for the augmented MPTCP* (or e.g. SCTP) either is needed/requested/calculated for replacing an existing TCP subflow with an GMPLS-TE/MPLS/RSVP path or for a new GMPLS-TE/MPLS/RSVP path, which does not have a MPTCP subflow yet.

An advantage common to all substitutions/supplementations shown in Figs 7 to 9 is the fact that the application APP does not "realize" that something happened in the lower layers, but just "sees" a data connection, for example to an application running on another communication device D1, D2.

By reference to Figs. 6 and 9 the substituting/supplementing process is explained in more detail. Nevertheless, the example refers to exchanging primary communication channels C1, C2 by communication channels C1, C2 based on the RSVP/ PCEP protocol, it applies to the GMPLS protocol in a similar way.

Preferably the path computation client PCC with its PCEP protocol is embedded or attached to the MPTCP, because the application APP is not impacted by the augmented functionality then. Nevertheless, even an integration into the application APP is possible in principle.

According to this example, the MPTCP* starts creating TCP subflows (towards/between the local origination and destination) in order to setup the multipath as of today specifications, but also consults the internal PCC as early as possible. Therefore the application APP benefits from fast connectivity, and in a next step the MPTCP* request from the PCC* a remote calculation of paths from the PCE. Once the PCC* receives the response from the PCE*, the PCC* reports the result back to the MPTCP.

Additionally, the MPTCP* may also incorporate a RSVP module, such that the MPTCP - despite several communication channels C1, C2 have already been created and are in operation in order to fulfill the requirement of the application in question - now is able to initiate a RSVP* reservation.

As with normal RSVP TE procedures and once the RSVP path had been successfully been setup, the MPTCP* module is in the position to swap the packets from the normal TCP subflows to the RSVP tunnels by adding the corresponding MPLS labels, as negotiated during the RSVP path set up.

Consequently, the traffic generated by the application APP is moved step wise from the TCP subflows in operation to the sequentially set up RSVP paths without notice and impact on the higher layer application APP, until only the/one original old TCP subflow may last in order to maintain the MCTCP. Thus, seamless movement of the application traffic results.

In order to identify and correlate the MPLS labels and the TCP subflows, such as the source address and port, destination address and port, protocol number plus the said local connection identifier, the PCEP protocol (may be added to the PcRequest) is enhanced with the local connection identifiers of the originating and the destination communication devices D1..D3, in order to be able to replace the primarily created TCP subflows later on. Additionally the PCEP protocol is enhanced with an explicit indication that this is a path to be calculated for the augmented MPTCP* (or e.g. SCTP), which either is needed/requested/calculated to replace an existing TCP subflow with an RSVP path or that it is a new RSVP path, which does not have a MPTCP subflow yet (depends on the application requirements and state the MPTCP* protocol machine may have reached during set up).

The path computation client PCC is not necessarily consulted before the RSVP-TE procedures have been started. In this case the RSVP-TE/GMPLS-TE protocol can be augmented in a similar way. They can be enhanced with the local connection identifiers of the originating and the destination communication devices D1..D3 in order to be able to replace the primarily created TCP subflows respectively communication channels C1, C2 later on. Additionally, the RSVP protocol is enhanced with an (explicit or implicit) indication that this is a path to be calculated for the augmented MPTCP* (or e.g. SCTP), which either is needed/requested/calculated to replace an existing TCP subflow with an RSVP path or that it is a new RSVP path, which does not have a MPTCP subflow yet. This information in general shall also be available for the PCEP protocol in case the augmented MPTCP* consults the path computation element PCE via the path computation client PCC.

By this measures, path calculation of such a RSVP path does not substantially add to the overall resource consumption (like bandwidth, CPU, storage in case of IT resources) as the original consuming TCP subflow will be removed immediately after the RSVP path had been set up.

The usage of the PCEP protocol allows the network operator to hide its internals via OSPF, however it allows the augmented MPTCP* still to express the needs of the applications APP.

As a result the network operators can schedule the different needs of all of the users and their applications into their networks in a comfortable and efficient way. With the usage of the PCEP* protocol the operator can assure that the resulting (RSVP path) become disjoint, even across several network operators, which is not possible with the MPTCP alone.

Concluding, inter alia following advantages result:
- There is no impact on the application APP.
- The network operator is able to direct the application traffic as convenient/efficient.
- The subflows do not compete for resources/bandwidth.
- The User gets guaranteed services.
- Seamless interworking is provided.
- Applicable inter alia to DSL, Wi-Fi, LTE, UMTS, etc.
- The network is able to compute the "best" connection for each user.

It should be noted at this point that the communication devices D1..D3 and other equipment shown in Figs. 1 to 9 are not limited to a particular embodiment shown in a particular Figure, but can be prepared to establish a data connection based on a plurality of the shown embodiments.

It should also be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state that a data connection between at least two communication devices D1..D3 having at least two parallel active communication channels C1, C2 is established in a network NW. For this reason, the RSVP protocol, the PCEP protocol and/or GMPLS protocol is used. Moreover, said protocols may be used for substituting or supplementing an existing data connection between communication devices D1..D3, which was established based on another protocol like the TCP protocol or the MPTCP protocol.

### List of reference signs:

- C1, C2: communication channel
- D1..D3: communication device
- DB: database
- INF1, INF2: information
- N1..N6: network node
- NW: network
- PCE: path computation element
- REQ: request
- APP: application layer
- MPTCP: MPTCP layer
- TCP: TCP layer
- IP: IP layer
- PCC*: (modified) PCC layer
- RSVP*: (modified) RSVP layer
- MPLS*: (modified) MPLS layer

## Claims

1. Method for establishing a data connection in a network (NW) between at least two communication devices (D1..D3) by means of the Resource Reservation Protocol, "RSVP" for short, and/or the Path Computation Element Protocol, "PCEP" for short, and/or the Generalized Multi-Protocol Label Switching Protocol, "GMPLS" for short,
wherein
at least two parallel active communication channels (C1, C2) are established between said at least two communication devices (D1..D3).

2. Method as set forth in claim 1, wherein the communication channels (C1, C2) are established based on information (INF1, INF2) about the capabilities and addresses of the at least two communication devices (D1..D3).

3. Method as set forth in claim 1 or 2, wherein a path computation element (PCE) computes a plurality of paths between the at least two communication devices (D1..D3) based on their capabilities and addresses and wherein the communication channels (C1, C2) are established based on said paths.

4. Method as set forth in claim 3, wherein the communication devices (D1..D3) send information (INF1, INF2) about their capabilities and addresses directly to the path computation element (PCE).

5. Method as set forth in claim 3, wherein a first communication device (D1) from said at least two communication devices (D1..D3) retrieves, from a second communication device (D2) from said at least two communication devices (D1..D3), information (INF2) about capabilities and an address of said second communication device (D2) and sends information (INF1) about its capabilities and address and information (INF2) about the capabilities and address of said second communication device (D2) to the path computation element (PCE).

6. Method as set forth in claim 3, wherein the at least two communication devices (D1..D3) send information (INF1, INF2) about their capabilities and addresses to a data base (DB) and wherein the path computation element (PCE) retrieves said data from said data base (DB).

7. Method as set forth in claim 3, wherein the at least two communication devices (D1..D3) send information (INF1, INF2) about their capabilities and addresses to a data base (DB) and wherein a first communication device (D1) from said at least two communication devices (D1..D3) retrieves, from said data base, information about a second communication device (D2) from said at least two communication devices (D1..D3) and sends information (INF1) about its capabilities and address and said information (INF2) about the capabilities and address of said second communication device (D2) to the path computation element (PCE).

8. Method as set forth in any one of the claims 3 to 7, wherein the at least two communication channels (C1, C2) are established on different paths of the network (NW) or wherein the communication channels (C1, C2) are established on a single path of the network (NW).

9. Method as set forth in any one of the preceding claims, wherein an communication channel (C1) between the at least two communication devices (D1..D3) is established by means of the Transmission Control Protocol, "TCP" for short, which is substituted or supplemented by at least two communication channels (C1, C2) established by means of the RSVP protocol and/or the PCEP protocol and/or the GMPLS protocol.

10. Method as set forth in any one of the preceding claims, wherein at least two parallel active communication channels (C1, C2) between the at least two communication devices (D1..D3) are established by means of the Multipath Transmission Control Protocol, "MPTCP" for short, which are substituted or supplemented by communication channels (C1, C2) established by means of the RSVP protocol and/or the PCEP protocol and/or the GMPLS protocol.

11. Method as set forth in any one of the preceding claims, wherein the capabilities of at least one of said at least two communication devices (D1..D3) include one or more of
- kind of the network (NW), which the communication device (D1..D3) is connected to;
- bandwidth of a port of the communication device (D1..D3) to said network (NW);
- bandwidth of a communication channel (C1, C2)/data connection in said network (NW);
- shared link risk group of a data connection in said network (NW);
- packet loss of the last mile from the communication device (D1..D3) to the connected network (NW);
- wavelength of the last mile from the communication device (D1..D3) to the connected network (NW);
- latency of the last mile from the communication device (D1..D3) to the connected network (NW);
- jitter of a communication channel (C1, C2)/data connection to said network (NW);
- load of a communication channel (C1, C2)/data connection to said network (NW);
- availability of a communication channel (C1, C2)/data connection to said network (NW);
- reliability of a communication channel (C1, C2)/data connection to said network (NW);
- tariff/cost of a communication channel (C1, C2)/data connection to said network (NW);
- restart time of an application running in the communication device (D1..D3) and using a communication channel (C1, C2)/data connection to said network (NW);
- maintenance window of an application attached to said network (NW).

12. Method as set forth in any one of the preceding claims, wherein at least one of the at least two communication devices (D1..D3) is embodied as a mobile phone, a smart phone, a tablet, a notebook, a personal computer, a machine to machine device or machine type communication device.

13. Method as set forth in any one of the preceding claims, wherein at least one of the at least two communication devices (D1..D3) is embodied as a gateway or a router, in particular a gateway or a router to a private network.

14. System comprising means configured to perform all method steps of the methods according to claims 1 to 13.

15. Apparatus (PCE) for establishing a data connection in a network (NW) between at least two communication devices (D1..D3) by means of the Resource Reservation Protocol, "RSVP" for short, and/or the Path Computation Element Protocol, "PCEP" for short, and/or the Generalized Multi-Protocol Label Switching Protocol, "GMPLS" for short, wherein
at least two parallel active communication channels (C1, C2) are established between said at least two communication devices (D1..D3).
